(19) Europäisches Patentamt
European Patent Office
Office européen des brevets

(11) **EP 1 440 255 B1**

(12) **EUROPÄISCHE PATENTSCHRIFT**

(45) Veröffentlichungstag und Bekanntmachung des Hinweises auf die Patenterteilung:
**21.04.2010 Patentblatt 2010/16**

(21) Anmeldenummer: **02801914.9**

(22) Anmeldetag: **25.10.2002**

(51) Int Cl.:
*F16H 7/06* (2006.01)

(86) Internationale Anmeldenummer:
**PCT/EP2002/011962**

(87) Internationale Veröffentlichungsnummer:
**WO 2003/036129 (01.05.2003 Gazette 2003/18)**

(54) **GELENKKETTENANTRIEB, SOWIE VERFAHREN ZUM ANTRIEB DES ANTRIEBSKETTENRADDES EINER GELENKKETTE**

LINK CHAIN DRIVE, AS WELL AS METHOD TO DRIVE THE DRIVE CHAINWHEEL OF A LINK CHAIN

ENTRAINEMENT DE CHAINE, AUSSI BIEN QUE PROCEDE D'ENTRAINER LA ROUE D'ENTRAINEMENT DE L'ENTRAINEMENT DE CHAINE

(84) Benannte Vertragsstaaten:
**AT BE BG CH CY CZ DE DK EE ES FI FR GB GR IE IT LI LU MC NL PT SE SK TR**

(30) Priorität: **26.10.2001 DE 10152303**
**29.05.2002 DE 10224232**

(43) Veröffentlichungstag der Anmeldung:
**28.07.2004 Patentblatt 2004/31**

(60) Teilanmeldung:
**09011639.3 / 2 123 936**
**09011640.1 / 2 123 937**

(73) Patentinhaber: **Ketten Wulf Betriebs-GmbH**
**59889 Eslohe-Kückelheim (DE)**

(72) Erfinder: **Grobbel, Burkhard**
**57392 Schmallenberg (DE)**

(74) Vertreter: **Basfeld, Rainer**
**Fritz Patent- und Rechtsanwälte**
**Ostentor 9**
**59757 Arnsberg (DE)**

(56) Entgegenhaltungen:
| | |
|---|---|
| DE-A- 19 945 921 | DE-B- 1 180 312 |
| DE-C- 443 192 | DE-C- 512 013 |
| DE-C- 576 950 | DE-C- 19 716 411 |
| FR-A- 1 360 212 | GB-A- 354 169 |
| GB-A- 422 184 | GB-A- 2 243 430 |
| US-A- 2 767 592 | US-A- 4 498 890 |

**Beschreibung**

Technisches Gebiet

Die Erfindung betrifft einen Gelenkkettenantrieb, insbesondere als Zwischenantrieb für eine gestreckte Gelenkkette, enthaltend ein Antriebskettenrad für eine Gelenkkette. Ferner betrifft sie ein Verfahren für den Antrieb einer Gelenkkette bzw. des Antriebskettenrades einer Gelenkkette, insbesondere für den Zwischenantrieb einer gestreckten Gelenkkette.

Stand der Technik

Gelenkketten werden als flexible Zugmittel zur Übertragung von Kräften eingesetzt. Sie bestehen aus starren und im Wesentlichen untereinander identischen Kettengliedern, welche sukzessive in Gelenkdrehpunkten miteinander gekoppelt sind. Der Abstand zwischen zwei benachbarten Gelenken wird dabei als Teilung der Gelenkkette bezeichnet. Gelenkketten werden in der Regel geschlossen hergestellt und dann endlos umlaufend um mindestens zwei Kettenräder geführt. Die Gelenkkette wirkt dabei als Antriebskette zur Übertragung mechanischer Leistung von einer Welle auf die andere, wenn eines der beiden Räder angetrieben und eine mechanische Leistung vermöge der Gelenkkette auf das andere Rad übertragen wird. Eine weitere häufig anzutreffende Anwendung von Gelenkketten besteht darin, dass von der Kette beziehungsweise von zwei oder mehreren parallel verlaufenden Gelenkketten ein Fördergut (Rohmaterial, Bauteile etc.) über eine bestimmte Strecke gefördert wird. Derartige Gelenkketten werden als Förderketten bezeichnet.

Der Antrieb von Gelenkketten erfolgt in den meisten Fällen durch rotierende Antriebskettenräder mit radial abstehenden Fortsätzen oder Zähnen, die in die Gelenkkette eingreifen und eine Zugkraft auf die Kettenglieder ausüben. Die Kette kann dabei das Antriebskettenrad sowohl umschlingen, das heißt am Antriebskettenrad eine Richtungsumkehr von typischerweise 90° bis 180° erfahren, als auch gestreckt am Antriebskettenrad vorbeilaufen, so dass Letzteres nur entlang einer kurzen Wegstrecke in die Gelenkkette eingreift. Bei dem letztgenannten Zwischenantrieb einer gestreckten Kette kommt es durch die Abweichung des Antriebskettenrades von der idealen Kreisform zu einer Relativbewegung zwischen der Gelenkkette und dem gerade kraftübertragend hierin eingreifenden Zahn, was aufgrund der dabei wirksamen Zugkräfte zu einem hohen Verschleiß führt.

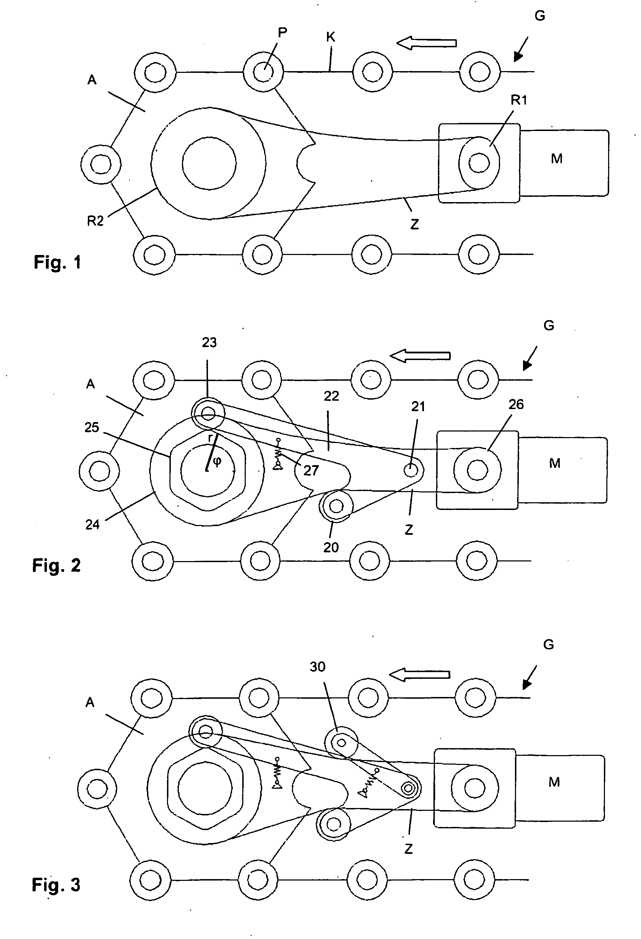

Figur 1 zeigt einen Gelenkkettenantrieb für eine Gelenkkette G. Die aus einzelnen Kettengliedern K bestehende Gelenkkette G ist dabei nur teilweise in dem Bereich dargestellt, in dem sie um das Antriebskettenrad A herumläuft. Da Gelenkketten anders als etwa flexible Antriebsriemen aus starren Kettengliedern K bestehen, entspricht das Antriebskettenrad A funktional einem Polygon, wobei die Seitenlänge des Polygons gleich der Teilung der Gelenkkette G ist. Wenn das Antriebskettenrad A mit gleichförmiger Drehzahl von einem Motor M über ein Zugmittel Z wie etwa einen Zahnriemen oder eine weitere Gelenkkette angetrieben wird, verursacht dies in der Gelenkkette G eine ungleichförmige Bewegung, welche unter dem Stichwort "Polygoneffekt" bekannt ist. Des Weiteren verursacht jedes Auftreffen eines Gelenkdrehpunktes P zwischen zwei Kettengliedern K auf das Antriebskettenrad A einen kurzen Stoßimpuls in der Kette, welcher sich belastend auf die Kette auswirkt. Durch eine kleine Teilung der Gelenkkette G kann der Polygoneffekt zwar gering gehalten werden, jedoch ist eine solche kleine Teilung gerade bei langen Förderketten sehr kostenaufwendig. Durch die ungleichförmige Geschwindigkeit der Gelenkkette G entstehen hierin stark belastende periodische Beschleunigungen, welche sich auch auf ein gefördertes Gut ungünstig auswirken können.

Es ist daher vorgeschlagen worden, das Antriebskettenrad A mit einer periodisch ungleichförmigen Drehzahl anzutreiben, welche gerade so gewählt ist, dass die durch die polygonale Form des Antriebskettenrades A entstehenden Geschwindigkeitsschwankungen bei der Bewegung der Gelenkkette G ausgeglichen werden. Zur Erzeugung der ungleichförmigen Drehzahl kann zum Beispiel ein Asynchronmotor mit entsprechend variierten Frequenzen angesteuert bzw. versorgt werden (vgl. DE 30 18 357 C2). Gemäß einem anderen, in Figur 1 angedeuteten Vorschlag wird das mit dem Antriebsmotor M unmittelbar gekoppelte Rad R1 mit einer speziellen Umfangsform ausgebildet, welche quasi einen den Polygoneffekt kompensierenden Antrieb des Antriebskettenrades A erzeugt (vgl. DE 30 31 130 C2, DD 247 731 A1). Nachteilig bei dieser Lösung ist jedoch, dass in den Knickbereichen des kurvenförmigen Rades R1 eine hohe Flächenpressung und damit ein hoher Verschleiß auftritt. Ferner ist die Herstellung eines solchen Rades mit einer typischerweise polygonalen Umfangsform und mit darin eingearbeiteten Zähnen sehr aufwendig und daher sehr teuer.

Des Weiteren ist aus der gattungsgemäßen DE 199 36 742 A1 ein Antrieb bekannt, welcher zwei zusammenwirkende Unrundräder zur Erzeugung einer ungleichförmigen Drehzahl enthält. Auch ein solcher Antrieb ist jedoch verhältnismäßig aufwendig und teuer in der Realisierung.

Um den oben genannten Problemen eines Zwischenantriebes zu begegnen wird in der DE 199 45 921 A1 ein Antriebskettenrad vorgeschlagen, bei welchem die Zähne schwenkbeweglich um eine jeweilige individuelle Drehachse am Antriebsrad angebracht sind, wobei ferner jeder Zahn eine Abtastrolle aufweist, welche an einer ortsfesten Kurvenscheibe entlang fährt. Bei einer Drehung des Antriebsrades führen die Zähne somit eine dieser Drehung überlagerte Schwenkbewegung aus, welche bei entsprechender Formgebung der Kurvenscheibe dazu ausgenutzt werden kann, den Polygoneffekt zu reduzieren. Es kommt jedoch weiterhin zu einem Verschleiß der Gelenkkette sowie der Zähne durch die Relativbewegung zwischen ihr und den Zähnen.

Aus der DE 51 20 13 ist ferner ein Gelenkkettenantrieb enthaltend ein Antriebskettenrad für eine Gelenkkette, sowie ein Antriebssystem, welches das Antriebskettenrad zum Ausgleich von Geschwindigkeitsschwankungen der Gelenkkette mit ungleichförmiger Drehzahl antreiben kann bekannt geworden. Die hier vorgeschlagene Lösung zum Ausgleich der ungleichen Geschwindigkeiten bei langgliedrigen Gelenkketten kommt jedoch nicht ohne eine Bewegung des Antriebsmotors aus. Der Antriebsmotor wird in der Erfindung gemäß DE 51 20 13 beispielsweise auf einem Schwinghebel befestigt.

Aufgabe und Lösung

Vor diesem Hintergrund war es Aufgabe der vorliegenden Erfindung, einen verbesserten Gelenkkettenantrieb bereitzustellen, welcher den Polygoneffekt, den Kettenverschleiß sowie die Geräuschentwicklung minimiert, der jedoch ohne eine Bewegung des Stators des Antriebsmotors auskommt.

Diese Aufgabe wird durch Gelenkkettenantriebe, sowie Verfahren mit den Merkmalen der unabhängigen Ansprüche gelöst. Vorteilhafte Ausgestaltungen sind in den Unteransprüchen enthalten. Die Gegenstände der verschiedenen Ansprüche können beliebig miteinander kombiniert werden.

Der einem ersten Aspekt der Erfindung zugrundeliegende Gelenkkettenantrieb enthält ein Antriebskettenrad für eine Gelenkkette sowie ein Antriebssystem, welches das Antriebskettenrad zum Ausgleich von Geschwindigkeitsschwankungen der Gelenkkette mit ungleichförmiger Drehzahl antreiben kann. Unter einem "Antriebssystem" soll dabei hier und im Folgenden in einem weiten Sinne jedes System verstanden werden, welches Kräfte bzw. Drehmomente an das Antriebskettenrad abgeben kann. Dies umfasst insbesondere Antriebssysteme im engeren Sinne, bei welchen die genannten Kräfte bzw. Drehmomente aktiv erzeugt werden, z.B. mit einem Elektromotor. Eingeschlossen sind jedoch auch "passive" Antriebssysteme, bei denen die genannten Kräfte bzw. Drehmomente Trägheitssystemen wie z.B. einer rotierenden Schwungmasse entnommen werden. Gemäß einer ersten Ausführungsform ist der Gelenkkettenantrieb **dadurch gekennzeichnet, dass** das Antriebssystem die folgenden Elemente enthält:

- zwei Räder, welche über ein endlos umlaufendes flexibles Zugmittel gekoppelt sind, so dass die Drehung des einen Rades über das Zugmittel auf das andere Rad übertragen werden kann;
- ein bewegliches Spannelement wie zum Beispiel eine Spannrolle, welches durch Einwirkung auf den Lasttrum des Zugmittels die effektive Länge des Lasttrums ändert; der Lasttrum des Zugmittels ist definitionsgemäß derjenige Abschnitt des flexiblen Zugmittels, über welchen die Kraft vom treibenden Rad zum angetriebenen Rad übertragen wird. Die genannte Längenänderung erfolgt vorzugsweise periodisch und synchron zur Drehung des Antriebskettenrades von Zahn zu Zahn.

Bei dem erläuterten Gelenkkettenantrieb kann in konstruktiv einfacher, zuverlässiger und kostengünstiger Weise die Kraftübertragung zwischen einem Antriebsmotor oder dergleichen (z.B. einer Schwungmasse) und dem Antriebskettenrad der Gelenkkette über zwei herkömmliche (runde) Räder und ein hierüber geführtes Zugmittel (z.B. Riemen, Antriebskette) erfolgen. Die gewünschte Ungleichförmigkeit der übertragenen Drehzahl wird in diesen Antriebsmechanismus vermöge des Spannelementes eingeführt, welches direkt oder indirekt auf den Lasttrum einwirkt und diesen verschieden weit auslenkt, um seine effektive Länge und damit den Phasenwinkel zwischen den beiden Rädern des Zugmittels zu verändern. Da das Spannelement selbst keine Drehmomente überträgt, unterliegt es nur einem geringen Verschleiß.

Gemäß einer Weiterbildung der Erfindung enthält das Antriebssystem einen Abtastmechanismus, welcher mit dem Spannelement zusammenwirkend gekoppelt ist und welcher ein mit dem Antriebskettenrad zusammenwirkend gekoppeltes Kurvenelement abtastet. Die Steuerung des Spannelementes kann somit über das Abtasten eines mit dem Antriebskettenrad gekoppelten und daher mit diesem synchron sich bewegenden Kurvenelementes erfolgen. Letzteres ist kostengünstiger herzustellen als ein unrundes Zahnrad, wie es aus dem Stand der Technik (Figur 1) bekannt ist. Zwei Bewegungen sollen hierbei und im Folgenden "synchron" genannt werden, wenn sie markante Bewegungszustände gleichzeitig oder mit einem konstanten Zeitversatz durchlaufen. Insbesondere werden zwei periodische Bewegungen synchron genannt, deren Frequenzverhältnis rational (ein Verhältnis zweier ganzer Zahlen) ist.

Gemäß einer Weiterbildung der vorstehend genannten Ausführungsform enthält der Antriebsmechanismus einen schwenkbeweglichen Hebel, an dessen einem Arm das Spannelement und an dessen anderem Arm eine Abtastrolle angeordnet ist, wobei die Abtastrolle mit dem Kurvenelement in Kontakt steht. Die Abtastrolle bewegt sich somit bei einer Bewegung des Kurvenelementes entlang der in der Form des Kurvenelementes niedergelegten Bahn, was zu entsprechenden Schwenkbewegungen des Hebels und damit des Spannelementes führt.

Ferner kann ein auf den jeweiligen Lasttrum und ein auf den jeweiligen Leertrum (kräftefreier Abschnitt) des Zugmittels einwirkendes Spannelement vorhanden sein, wobei beide Spannelemente mit dem Abtastmechanismus gekoppelt sind. Welcher Teil eines Zugmittels Lasttrum und welcher Leertrum ist, richtet sich nach der Drehrichtung des Zugmittels. Bei Anwendungen, bei denen die Gelenkkette in beiden Richtungen bewegt werden soll (zum Beispiel zum Hin- und Zurück Fördern von Transportgütern) nimmt daher ein bestimmter Abschnitt des Zugmittels abwechselnd die Funktionen des Lasttrums und des Leertrums an. Um in einem solchen Anwendungsfall eine gewünschte ungleichförmige Drehzahl des Antriebskettenrades gewährleisten zu können, werden gemäß dem obigen Vorschlag zwei Spannelemente vorgesehen, so dass bei jeder Drehrichtung der Gelenkkette eines von ihnen auf den jeweiligen Lasttrum des Zugmittels einwirken kann.

Vorzugsweise enthält bei der letzten Ausgestaltung des Gelenkkettenantriebs der Abtastmechanismus zwei Abtastrollen, von denen je nach Drehrichtung des Antriebskettenrades der Gelenkkette eine Abtastrolle mit dem Kurvenelement in Kontakt steht. Den zwei verschiedenen Spannelementen sind somit auch zwei verschiedene Abtastrollen zugeordnet, so dass jede Abtastrolle mit der zu ihr passenden Abtastung bewegt werden kann.

Die Einwirkung des Spannelementes auf den Lasttrum kann weiterhin dadurch erzielt werden, dass das Spannelement als eine Unrundrolle mit einer ortsfesten Drehachse ausgebildet ist, welche zwecks Antrieb mit dem Zugmittel und/oder mit dem Antriebskettenrad zusammenwirkend gekoppelt ist. Bei ihrer Drehung lenkt die Unrundrolle den Lasttrum entsprechend ihrer Form verschieden weit aus, was zur gewünschten Änderung seiner effektiven Länge führt. Vorzugsweise ist die Unrundrolle formschlüssig mit dem Zugmittel gekoppelt, zum Beispiel durch Ausbildung als ein in das Zugmittel eingreifendes Zahnrad, so dass ihre synchrone Drehung unmittelbar vom Zugmittel selbst sichergestellt wird.

Vorteilhafterweise sind zwei derartige als Unrundrolle ausgebildete Spannelemente vorhanden, von denen eines auf den jeweiligen Lasttrum und das andere auf den jeweiligen Leertrum des Zugmittels einwirkt. Bei einer solchen Ausgestaltung ist gewährleistet, dass bei jeder Drehrichtung der Gelenkkette die erwünschte Einwirkung auf den jeweiligen Lasttrum des Zugmittels zur Erzeugung einer ungleichförmigen Drehzahl erfolgt.

Die Erfindung betrifft ferner ein Verfahren zum Antrieb des Antriebskettenrades einer Gelenkkette mit ungleichförmiger Drehzahl zwecks Ausgleich von Geschwindigkeitsschwankungen der Gelenkkette, welches dadurch gekennzeichnet ist, dass das Antriebskettenrad über ein flexibles Zugmittel angetrieben wird, und dass die effektive Länge des Lasttrums des Zugmittels synchron zur Drehung des Antriebskettenrades variiert wird. Die Längenveränderung des Lasttrums erfolgt dabei durch eine Auslenkung des Lasttrums oder eines der Räder, um welche das Zugmittel verläuft.

Das Verfahren garantiert in einer kostengünstig zu realisierenden und besonders störungssicheren Weise einen Antrieb des Antriebskettenrades mit ungleichförmiger Drehzahl, welche den Polygoneffekt des Antriebskettenrades kompensiert.

## Kurze Beschreibung der Figuren

Im Folgenden wird die Erfindung mit Hilfe der Figuren beispielhaft erläutert. Die Figuren 1-6 zeigen jeweils einen Gelenkkettenantrieb im Bereich des Antriebskettenrades der Gelenkkette, und insbesondere:

Fig. 1      einen Gelenkkettenantrieb nach dem Stand der Technik;

Fig. 2      einen Gelenkkettenantrieb mit einer Veränderung des Lasttrums eines Zugmittels;

Fig. 3      einen Gelenkkettenantrieb nach Figur 2 mit zusätzlicher Spannrolle im Leertrum;

Fig. 4      einen Gelenkkettenantrieb mit zwei Spannrollen bei einer Drehung im Uhrzeigersinn und gegen den Uhrzeigersinn;

Fig. 5      einen Gelenkkettenantrieb mit einer unrunden Spannrolle am Lasttrum;

Fig. 6      einen Gelenkkettenantrieb mit je einer unrunden Spannrolle am Lasttrum und am Leertrum bei einer Drehung im Uhrzeigersinn und gegen den Uhrzeigersinn.

## Detaillierte Beschreibung der Figuren

Figur 1 stellt einen Gelenkkettenantrieb nach dem Stand der Technik dar und wurde eingangs bereits erläutert. Die in dieser Figur verwendeten Bezugszeichen sollen auch für die übrigen Figuren gelten, sofern die entsprechenden Teile gleich bleiben. Weiterhin sei darauf hingewiesen, dass alle Figuren nur die Konturen der Bauteile darstellen, d.h. die Bauteile selbst sind transparent.

Eine erste erfindungsgemäße Ausgestaltung eines ungleichförmigen Antriebs für das Antriebskettenrad A einer Gelenkkette G ist in Figur 2 dargestellt. Im Unterschied zum Stand der Technik nach Figur 1 sind bei diesem Gelenkkettenantrieb sowohl das treibende Rad 26 als auch das angetriebene Rad 24, welches mit dem Antriebskettenrad A des Gelenkkettenantriebs gekoppelt ist beziehungsweise auf dessen Welle sitzt, in herkömmlicher Weise kreisrund ausgebildet. Die Herstellung solcher Räder ist daher verhältnismäßig einfach und standardisiert. Die Ungleichförmigkeit der Übertragung der gleichförmigen Drehung des treibenden Rades 26 auf das angetriebene Rad 24 wird erfindungsgemäß dadurch verursacht, dass der Lasttrum dieses Antriebs (d.h. in Figur 2 der untere Abschnitt des Zugmittels Z bei einer Drehung des Antriebskettenrades A gegen den Uhrzeigersinn) von einer Spannrolle 20 verschieden stark eingedrückt wird, so dass sich seine effektive Länge ändert. Das Ausmaß des Eindrückens des Lasttrums wird dabei von einem Abtastmechanismus gesteuert, welcher eine Abtastrolle 23 enthält, die über einen spitzwinkligen, im ortsfesten Drehpunkt 21 gelagerten und mit der Spannrolle 20 verbundenen Hebel 22 getragen wird. Die Abtastrolle 23 liegt an dem Umfang einer auf der Welle des Antriebskettenrades A angeordneten Kurvenscheibe 25 an und tastet deren Kurvenform ab. Eine Feder 27 sorgt dabei auch dann für einen Kontakt zur Kurvenscheibe 25, wenn im Lasttrum keine Spannung herrschen sollte. Die äußere Form dieser Kurvenscheibe kann empirisch oder theoretisch in einfacher Weise so bestimmt werden, dass je nach den konkreten konstruktiven Gegebenheiten eine derartige Ungleichförmigkeit der Drehzahl des Antriebskettenrades A entsteht, die Geschwindigkeitsschwankungen der Gelenkkette G möglichst gut ausgleicht. Eine mögliche Kurvenform wird z.B. durch die folgende Abhängigkeit des Radius r der Kurvenscheibe vom Polarwinkel φ (gemessen zwischen einem Referenzradius und dem betrachteten Radius in der Einheit rad) beschrieben:

$$r(\varphi) = R0 + d \cdot f(n \cdot \varphi) \, ,$$

wobei R0 der mittlere Radius, d < R0 die Radiusvariation und n eine natürliche Zahl ist. Die Funktion f soll betragsmäßig $\leq 1$ und periodisch mit der Periode $2\pi$ sein, $f(x+2\pi) = f(x)$, und kann z.B. durch eine Sinusfunktion oder Sinusähnliche Funktion realisiert werden.

Das Zugmittel Z kann sowohl kraftschlüssig (zum Beispiel als Keilriemen) als auch formschlüssig (zum Beispiel als Gelenkkette oder Zahnriemen) wirken, da ein eventueller Schlupf zwischen den beiden Rädern 26 und 24 für die Kompensationswirkung des Mechanismus unbeachtlich ist.

Bei der in Figur 2 gezeigten sowie bei allen anderen noch zu erläuternden Konstruktionen werden die Lager beweglicher Teile möglichst geräuschdämmend ausgebildet, was zum Beispiel durch die Zwischenschaltung von Kunststoffhülsen geschehen kann.

Bei der in Figur 3 gezeigten Abwandlung des Gelenkkettenantriebs aus Figur 2 ist am Leertrum des Zugmittels Z eine weitere Spannrolle 30 vorgesehen, welche jedoch nicht mit der Abtastung der Kurvenscheibe gekoppelt ist, sondern lediglich unter Wirkung einer Federkraft den Leertrum straff hält.

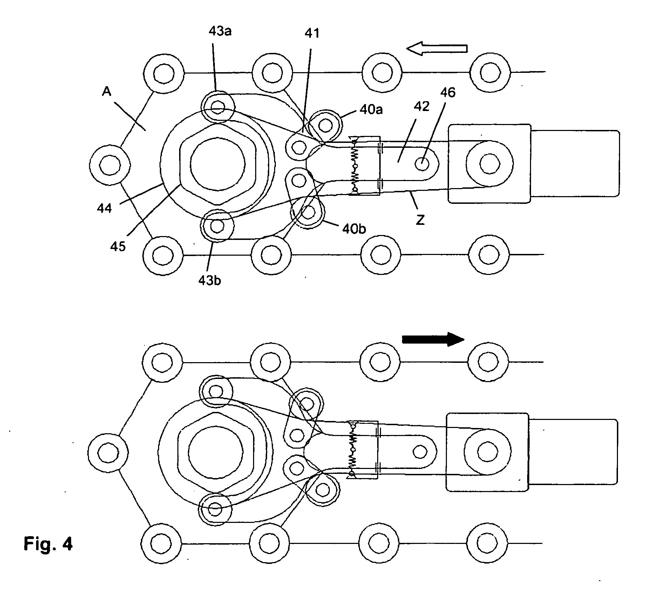

Figur 4 zeigt eine Weiterbildung des Gelenkkettenantriebs, welche für eine Drehung des Antriebskettenrades A in beide Richtungen geeignet ist. Der obere Teil von Figur 4 zeigt dabei eine Drehung des Antriebskettenrades gegen den Uhrzeigersinn und der untere Teil eine Drehung im Uhrzeigersinn (vgl. Pfeile an der Gelenkkette). Bei dieser Ausgestaltung ist der um eine ortsfeste Drehachse 46 schwenkbare Hebel 42 gabelförmig ausgebildet, wobei die Gabel die Kurvenscheibe 45 auf der Welle des Antriebskettenrades A umgreift. Am Hebel sind über zwei schwenkbewegliche Arme 41 zwei Spannrollen angeordnet, von denen die eine 40a am oberen Abschnitt und die andere 40b am unteren Abschnitt des Zugmittels Z anliegt. Die Arme 41 werden über einen Federmechanismus (nicht dargestellt) in eine möglichst dicht am Hebel 42 anliegende Position gedrängt.

Bei der oberen Darstellung von Figur 4 findet eine Drehung des Antriebskettenrades A gegen den Uhrzeigersinn statt. Dementsprechend ist der untere Abschnitt des Zugmittels Z der Lasttrum, in welchem eine große Kraft herrscht. Diese spannt den Lasttrum so weit wie möglich, was eine entsprechend große nach unten gerichtete Kraft auf die Spannrolle 40b ausübt. Diese nach unten gerichtete Kraft verursacht zum einen, dass sich der Arm dieser Spannrolle 40b etwa senkrecht zum Hebel 42 stellt, und zum anderen, dass der ganze Hebel 42 nach unten gezogen wird, bis die obere Abtastrolle 43a mit der Kurvenscheibe 45 in Kontakt kommt. Ähnlich wie bei dem in Figur 3 dargestellten Mechanismus wird somit die Kurvenscheibe 45 von der Abtastrolle 43a abgetastet und die hierdurch erzeugte Bewegung vermöge der Spannrolle 40b in eine entsprechende Verkürzung des Lasttrums übertragen. Die zweite Spannrolle 40a wirkt in diesem Zustand lediglich als federbelastete Spannrolle für den Leertrum.

Bei einer Änderung der Drehrichtung kehren sich wie im unteren Teil von Figur 4 gezeigt die Funktionen der Spannrollen und Abtastrollen um, wobei dieselbe gewünschte ungleichförmige Drehzahl des Antriebskettenrades A erzeugt wird.

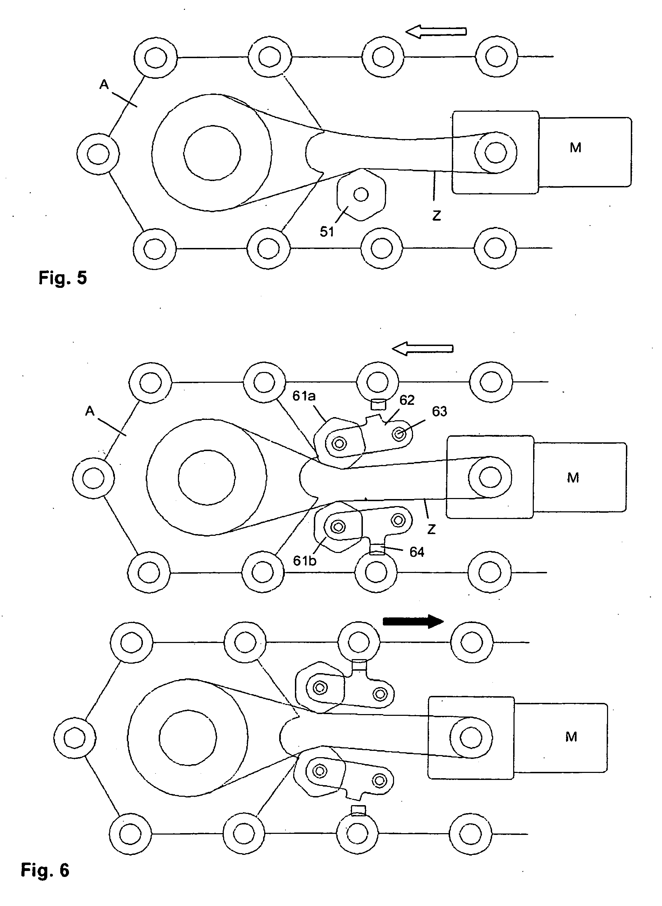

In Figur 5 ist eine alternative Möglichkeit zur Längenveränderung des Lasttrums dargestellt. Dabei wirkt ein Unrundrad 51 mit einer ortsfesten Drehachse auf den Lasttrum des Zugmittels Z ein, wobei die Umfangsform des Unrundrades so gewählt ist, dass die gewünschte kompensatorische Ungleichförmigkeit der Drehzahl am Antriebskettenrad A entsteht. Das Unrundrad steht vorzugsweise in formschlüssigem Eingriff mit dem Zugmittel Z, so dass es von diesem synchron mitgedreht wird. Alternativ oder zusätzlich kann das Unrundrad natürlich auch auf andere Art synchron mit dem Antriebskettenrad A gedreht werden. Da das Unrundrad keine Antriebsdrehmomente übertragen muss, unterliegt es trotz seiner nicht runden Form nur einem geringen Verschleiß.

Figur 6 zeigt eine Ausführungsform mit zwei schwenkbeweglich an Hebeln 62 mit der ortsfesten Schwenkachse 63 gelagerten und unter der Wirkung einer Feder an das Zugmittel Z angedrückten Unrundrädern 61a und 61b, von denen eines je nach Drehrichtung des Antriebskettenrades A am jeweiligen Lasttrum und das andere am jeweiligen Leertrum anliegt. Durch die Spannung im Lasttrum wird das hieran anliegende Unrundrad (61b im oberen Teil der Figur bei Drehung des Antriebskettenrades A gegen den Uhrzeigersinn; 61a im unteren Teil der Figur bei Drehung des Antriebskettenrades A im Uhrzeigersinn) dabei gegen einen ortsfesten Anschlag 64 gedrückt, so dass es sich effektiv wie ein Rad mit ortsfester Drehachse verhält.

**Patentansprüche**

1. Gelenkkettenantrieb enthaltend

- ein Antriebskettenrad (A) für eine Gelenkkette (G);
- ein Antriebssystem, welches das Antriebskettenrad zum Ausgleich von Geschwindigkeitsschwankungen der Gelenkkette mit ungleichförmiger Drehzahl antreiben kann;

wobei das Antriebssystem enthält:

- zwei Räder (R2, R1), welche über ein endlos umlaufendes

**dadurch gekennzeichnet dass** das Antriebssystem weiter enthält:

- ein bewegliches Spannelement (20, 40a, 40b, 51, 61a, 61b), welches durch Einwirkung auf den Lasttrum des Zugmittels die effektive Länge des Lasttrums synchron zur Drehung des Antriebskettenrades ändert.

2. Gelenkkettenantrieb nach Anspruch 1, **dadurch gekennzeichnet, dass** das Antriebssystem einen Abtastmechanismus umfasst, welcher mit dem Spannelement (20, 40a, 40b) zusammenwirkend gekoppelt ist und welcher ein mit dem Antriebskettenrad (A) zusammenwirkend gekoppeltes Kurvenelement (25, 45) abtastet.

3. Gelenkkettenantrieb nach Anspruch 2, **dadurch gekennzeichnet, dass** der Antriebsmechanismus einen schwenkbeweglichen Hebel (22, 42) umfasst, an dessen einem Arm das Spannelement (20, 40a, 40b) und an dessen anderem Arm eine Abtastrolle (23, 43a, 43b) angeordnet ist, wobei die Abtastrolle mit dem Kurvenelement (25, 45) in Kontakt steht.

4. Gelenkkettenantrieb nach Anspruch 3, **dadurch gekennzeichnet, dass** ein auf den jeweiligen Lasttrum und ein auf den jeweiligen Leertrum des Zugmittels (Z) einwirkendes Spannelement (20, 30, 40a, 40b) vorgesehen ist, wobei beide Spannelemente mit dem Abtastmechanismus gekoppelt sind.

5. Gelenkkettenantrieb nach Anspruch 4, **dadurch gekennzeichnet, dass** der Abtastmechanismus zwei Abtastrollen (43a, 43b) umfasst, von denen je nach Drehrichtung des Antriebskettenrades der Gelenkkette (G) eine Abtastrolle mit dem Kurvenelement (45) in Kontakt steht.

6. Gelenkkettenantrieb nach Anspruch 1, **dadurch gekennzeichnet, dass** das Spannelement als eine Unrundrolle (51, 61a, 61b) mit einer ortsfesten Drehachse ausgebildet ist, welche zwecks Antrieb mit dem Zugmittel und/oder mit dem Antriebskettenrad zusammenwirkend gekoppelt ist.

7. Gelenkkettenantrieb nach Anspruch 6, **dadurch gekennzeichnet, dass** zwei derartige als Unrundrolle (61a, 61b) ausgebildete Spannelemente vorhanden sind, von denen eines auf den jeweiligen Lasttrum und das andere auf den jeweiligen Leertrum des Zugmittels (Z) einwirkt.

8. Verfahren zum Antrieb des Antriebskettenrades (A) einer Gelenkkette (G) mit ungleichförmiger Drehzahl zwecks Ausgleich von Geschwindigkeitsschwankungen der Gelenkkette, wobei das Antriebskettenrad über ein flexibles Zugmittel (Z) angetrieben wird, **dadurch gekennzeichnet, dass** die effektive Länge des Lasttrums des Zugmittels synchron zur Drehung des Antriebskettenrades variiert wird, indem mit einem Spannelement (20, 40a, 40b, 51, 61a, 61b) auf den Lasttrum eingewirkt wird.

**Claims**

1. A sprocket chain drive, comprising

- a drive chain wheel (A) for a sprocket chain (G);
- a drive system able to drive the drive chain wheel with non-uniform speed for the compensation of velocity variations of the sprocket chain;

wherein the drive system includes:

- two wheels (R2, R1) coupled by means of an endlessly circulating flexible tensile means (Z);

**characterised in that** the drive system further includes

- a moveable tensioning element (20, 40a, 40b, 51, 61 a, 61 b), which changes the effective length of the tight span by acting on the tight span of the tensile means in synchronism with the rotation of the drive chain wheel,

2. The sprocket chain drive according to claim 1, **characterised in that** the drive system comprises a tracking mechanism coupled in interaction with the tensioning element (20, 40a, 40b) and tracking a cam element (25, 45) coupled in interaction with the drive chain wheel (A).

3. The sprocket chain drive according to claim 2, **characterised in that** the drive mechanism comprises a pivotable lever (22, 42) having the tensioning element (20, 40a, 40b) arranged at its one arm and a tracking roll (23, 43a, 43b) arranged at ins other arm, wherein the tracking roll is in contact with the cam element (25, 45).

**4.** The sprocket chain drive according to claim 3, **characterised in that** a tensioning element (20, 30, 40a, 40b) is provided acting on the respective tight span and the respective slack span of the tensile means (Z), wherein both tensioning elements are coupled with the tracking mechanism.

**5.** The sprocket chain drive according to claim 4, **characterised in that** the tracking mechanism comprises two tracking rolls (43a, 43b), one of which is in contact with the cam element (45) depending on the sense of rotation of the drive chain wheel of the sprocket chain (G).

**6.** The sprocket chain drive according to claim 1, **characterised in that** the tensioning element is formed as a non-circular roll (51, 61 a, 61 b) with a fixed rotary axis, which is coupled in interaction with the tensile means and/or the drive chain wheel for driving purposes.

**7.** The sprocket chain drive according to claim 6, **characterised in that** two such tensioning elements formed as non-circular rolls (61 a, 61 b) are present, one of which acts on the respective tight span and the other acting on the respective slack span of the tensile means (Z).

**8.** A method for driving the drive chain wheel (A) of a sprocket chain (G) with non-uniform speed for the purpose of compensating velocity variations of the sprocket chain, wherein
the drive chain wheel is driven by means of a flexible tensile means (Z),
**characterised in that** the effective length of the tight span of the tensile means is varied in synchronism with the rotation of the drive chain wheel by acting on the tight span by means of a tensioning element (20, 40a, 40b, 51,61a,61b).

**Revendications**

**1.** Entraînement de chaîne d'articulation comportant

    - une roue d'entraînement de chaîne (A) pour une chaîne d'articulation (G);
    - un système d'entraînement qui peut, en vue de compenser des variations de vitesse de la chaîne d'articulation, entraîner la roue d'entraînement de chaîne avec une vitesse de rotation non-uniforme;

le système d'entraînement comportant:

    - deux roues (R2, R1) qui sont couplées par un moyen de traction (Z) flexible tournant sans fini;

**caractérisé en ce que** le système d'entraînement comporte en outre:

    - un élément tendeur (20, 40a, 40b, 51, 61 a, 61 b) mobile qui, en agissant sur l'entrée de la chaîne sur la roue dentée du moyen de traction, modifie la longueur effective de l'entrée de la chaîne sur la roue dentée de manière synchrone par rapport à la rotation de la roue d'entraînement de chaîne.

**2.** Entraînement de chaîne d'articulation selon la revendication 1, **caractérisé en ce que** le système d'entraînement comprend un mécanisme tâteur qui est couplé avec l'élément tendeur (20, 40a, 40b) de manière à coopérer avec lui et qui tâte un élément-came (25, 45) couplé avec la roue d'entraînement de chaîne (A) de manière à coopérer avec elle.

**3.** Entraînement de chaîne d'articulation selon la revendication 2, **caractérisé en ce que** le mécanisme d'entraînement comprend un levier (22, 42) à mouvement pivotant sur lequel est disposé, sur un bras, l'élément tendeur (20, 40a, 40b) et, sur l'autre bras, un galet tâteur (23, 43a, 43b), le galet tâteur étant en contact avec l'élément-came (25, 45).

**4.** Entraînement de chaîne d'articulation selon la revendication 3, **caractérisé en ce qu'**il est prévu deux éléments tendeurs (20, 30, 40a, 40b) dont l'un agit sur l'entrée de la chaîne sur la roue dentée respectif et l'autre sur la purge de la chaîne de la roue dentée respectif du moyen de traction (Z), les deux éléments tendeurs étant couplés avec le mécanisme tâteur.

**5.** Entraînement de chaîne d'articulation selon la revendication 4, **caractérisé en ce que** le mécanisme tâteur comprend deux galets tâteurs (43a, 43b) dont un galet tâteur est, en fonction du sens de rotation de la roue d'entraînement de chaîne de la chaîne d'articulation (G), en contact avec l'élément-came (45).

**6.** Entraînement de chaîne d'articulation selon la revendication 1, **caractérisé en ce que** l'élément tendeur est réalisé sous la forme d'un galet ovalisé (51, 61 a, 61 b) avec un axe de rotation fixe, lequel est couplé, pour l'entraînement, avec le moyen de traction et/ou avec la roue d'entraînement de chaîne de manière à coopérer avec lui et/ou elle.

**7.** Entraînement de chaîne d'articulation selon la revendication 6, **caractérisé en ce qu'**il existe deux éléments tendeurs de ce type réalisés sous forme de galet ovalisé (61 a, 61 b) dont l'un agit sur l'entrée de la chaîne sur la roue dentée respectif et l'autre sur la purge de la chaîne de la roue dentée respectif du moyen de traction (Z).

8. Procédé permettant d'entraîner la roue d'entraînement de chaîne (A) d'une chaîne d'articulation (G) avec une vitesse de rotation non-uniforme en vue de compenser des variations de vitesse de la chaîne d'articulation, la roue d'entraînement de chaîne étant entraînée par un moyen de traction (Z) flexible, **caractérisé en ce que** la longueur effective de l'entrée de la chaîne sur la roue dentée du moyen de traction est variée de manière synchrone par rapport à la rotation de la roue d'entraînement de chaîne en agissant sur l'entrée de la chaîne sur la roue dentée avec un élément tendeur (20, 40a, 40b, 51, 61a, 61b).

**Fig. 1**

**Fig. 2**

**Fig. 3**

Fig. 4

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3018357 C2
- DE 3031130 C2
- DD 247731 A1
- DE 19936742 A1
- DE 19945921 A1
- DE 512013